# EUROPÄISCHE PATENTSCHRIFT

(11) **EP 0 922 887 B1**
(45) Veröffentlichungstag und Bekanntmachung des Hinweises auf die Patenterteilung: **03.03.2004**
(21) Anmeldenummer: 98121113.9
(22) Anmeldetag: 09.11.1998
(51) Int. Cl.: F16H 61/02, F16H 59/08

(54) **Verfahren und Steuervorrichtung zum Steuern eines Automatikgetriebes oder eines automatisierten Schaltgetriebes eines Kraftfahrzeuges**
A control apparatus and a control method for controlling an automatic transmission or an automated mechanical gearbox of a vehicle
Procédé et dispositif de commande d'une transmission automatique ou d'une boîte de vitesses mécanique robotisée d'un véhicule automobile

(30) Priorität: 11.12.1997 DE 19755096
(43) Veröffentlichungstag der Anmeldung: 16.06.1999
(73) Patentinhaber: Volkswagen Aktiengesellschaft, 38436 Wolfsburg (DE)
(72) Erfinder: Rüdiger, Reinhard, Dipl.-Ing., 31226 Peine (DE)
(74) Vertreter: Hübsch, Dirk, Dipl.-Ing.

(56) Entgegenhaltungen:
- EP-A- 0 353 310
- EP-A- 0 413 115
- EP-A- 0 584 985
- WO-A-96/28317
- DE-A- 3 735 184
- DE-A- 19 709 506

## Beschreibung

Die Erfindung betrifft ein Verfahren zum Steuern eines Automatikgetriebes oder eines automatisierten Schaltgetriebes eines Kraftfahrzeuges, gemäß dem Oberbegriff des Anspruchs 1. Die Erfindung betrifft ferner eine Steuervorrichtung für ein Automatikgetriebe oder ein automatisiertes Schaltgetriebe mit einem aus einer Neutralstellung auslenkbaren Schalthebel, einem Stellmittel, welches den Schalthebel in seine Neutralstellung zurückstellt und einer Getriebesteuervorrichtung, welche in Abhängigkeit von Auslenkungen des Schalthebels oder in Abhängigkeit von Schaltanforderungen einer Steuerelektronik die Gänge des Getriebes schaltet, arbeitend nach dem eingangs erwähnten Verfahren.

Aus der DE 37 17 675 C2 ist eine Schalteinrichtung für ein Kraftfahrzeug mit automatischem Getriebe bekannt, mit dessen Wählhebel in einer zweiten Schaltgasse Vorwärtsgänge manuell schrittweise schaltbar sind. Eine derartige manuelle sequentielle Getriebeschaltung bei einem Automatikgetriebe ist ebenfalls aus dem Artikel "Sequent Service", Auto Motor Sport 4/1997, Seite 56 bekannt.

Es ist eine Schaltgasse als sogenannte Tipgasse vorgesehen und die Gänge werden mittels eines dort angeordneten Schalthebels dadurch sequentiell aufwärts oder abwärts geschaltet, daß der Fahrer den Schalthebel in der Tipgasse in entsprechend entgegengesetzte Richtungen "tippt", beispielsweise nach vorn und nach hinten. Nach Loslassen des Schalthebels nimmt dieser aufgrund einer Eigenzentrierung, beispielsweise durch Federkräfte, wieder eine neutrale Mittelstellung ein. Eine Getriebesteuervorrichtung mit entsprechender Elektronik bzw. Logik und entsprechende Stellelementen (Aktuatoren) setzt die von dieser Betätigung des Schalthebels erzeugten Signale in einen Gangwechsel im Getriebe um. Die Elektronik bzw. Logik erleichtert gleichzeitig dem Fahrer eine Bedienung des Fahrzeugs, indem sie ohne Betätigung des Schalthebels selbständig die Gänge herunter schaltet, wenn beispielsweise aufgrund des Fahrzustandes ein Herunterschalten geboten ist. Ferner schaltet die Elektronik bzw. Logik die Gänge des Getriebes automatisch hoch, wenn beispielsweise eine Abregeldrehzahl des eines Motors erreicht ist.

Dies hat jedoch den Nachteil, daß der Fahrer keine letztliche Kontrolle über eine Gangwahl hat. Obwohl er beispielsweise bei glatter Fahrbahn im 2. Gang anfahren möchte, schaltet die Getriebesteuervorrichtung automatisch zum Anfahren in den 1. Gang.

Im Stand der Technik ist ein gattungsbildendes Verfahren zum Steuern eines Automatikgetriebes bekannt (EP 0 584 985 A1), bei dem ein Schalthebel in eine Position zum Hochschalten und in eine Position zum Herunterschalten des Ganges eines Getriebes bewegt werden kann. Wird nun der Schalthebel in die Position zum Hochschalten bewegt, so wird mit Hilfe eines Displays angezeigt, welcher Gang, also welches Übersetzungsverhältnis im Getriebe eingelegt werden kann. Hierzu zeigt das Display entsprechendes an. Jedoch wird erst in den entsprechenden Gang geschaltet, wenn der Schalthebel wieder in die Neutralstellung zurückbewegt worden ist. Solange der Schalthebel bspw. in der Position "Hochschalten" eingelegt ist, bleibt der anfängliche Gang eingelegt bzw. das anfängliche Übersetzungsverhältnis entsprechend eingestellt. Hierbei ist noch nicht optimal, dass einerseits zwar die Displayanzeige dem Fahrer hilft, den entsprechenden optimalen Gang zu finden, andererseits die Einlegung dieses Ganges aber einen entsprechend großen Zeitraum in Anspruch nimmt, insbesondere weil der Getriebegang erst eingelegt wird, wenn der Schalthebel wieder zurück in die Neutralstellung bewegt worden ist. Im Ergebnis hat dies den Nachteil, dass der Fahrer keine letztliche Kontrolle über eine Gangwahl hat, sondern diese erst erfolgt, wenn der Schalthebel wieder zurückbewegt, nämlich in die Neutralstellung zurückbewegt worden ist.

Der vorliegenden Erfindung liegt daher die Aufgabe zugrunde, ein Verfahren und eine Vorrichtung der obengenannten Art zur Verfügung zu stellen, wobei die obengenannten Nachteile überwunden werden und der Fahrer auf einfache und komfortable Weise eine Möglichkeit zur manuellen Bestimmung einer Gangwahl über eine von ihm bestimmte Zeitspanne erhält.

Diese Aufgabe wird erfindungsgemäß durch ein Verfahren der o.g. Art mit den in Anspruch 1 gekennzeichneten Merkmalen und durch eine Steuervorrichtung der o.g. Art, die nach diesem Verfahren arbeitet, mit den in Anspruch 4 gekennzeichneten Merkmalen gelöst. Vorteilhafte Ausgestaltungen der Erfindung sind in den abhängigen Ansprüchen angegeben.

Dazu ist es bei dem Verfahren vorgesehen, daß eine automatische Schaltfunktion solange unterdrückt wird, solange der Schalthebel außerhalb der Neutralstellung ist.

Dies hat den Vorteil, daß eine momentane manuelle Gangwahl eines Fahrers durch diesen solange aufrechterhalten bleibt und nicht durch eine automatische Schaltfunktion übersteuert wird, solange dies der Fahrer wünscht. Dazu muß der Fahrer lediglich den Schalthebel nach einem Antippen in eine ausgelenkte Stellung festhalten. Ferner sind keine zusätzlichen Schalter oder Anzeigeinstrumente zur Realisation der Unterdrückung einer automatischen Schaltfunktion erforderlich, was Kosten einspart und zur Übersichtlichkeit von Bedienelementen des Kraftfahrzeugs beiträgt. Dadurch ist auch die Bedienung selbst intuitiv erlernbar und muß nicht nachgelesen werden. Der Fahrer erhält jederzeit die Möglichkeit, sofern es ihm sinnvoll erscheint, die programmierten Erleichterungen der automatischen Getriebesteuerung für einen augenblicklichen Fahrzustand unter Verwendung des ihm bereits gewohnten Schaltelementes auszuschalten bzw. zu unterdrücken.

In vorteilhafter Weise hält der Fahrer seine letzte Schaltanforderung durch einfaches Halten des Schalthebels in einer ausgelenkten Position dadurch fest, daß die manuell ausgelöste Schaltfunktion automatisiert ausgeführt wird, sobald der Schalthebel seine Neutralstellung über eine vorbestimmte Auslenkung hinweg verlassen hat. Auf diese Weise muß der Fahrer nicht erst den Schalthebel auslenken, den Schalthebel in die Neutralstellung zum Auslösen des Schaltvorganges zurück bewegen und anschließend den Schalthebel zum Halten seiner Gangwahl wieder auslenken, sondern kann unmittelbar nach dem Auslenken des Schalthebels den dadurch manuell gewählten Gang festhalten.

In einer vorteilhaften Weiterbildung der Erfindung wird nach einer Rückkehr des Schalthebels in seine Neutralstellung eine automatische Steuerung des Getriebes sofort, nach Ablauf einer vorbestimmten Zeit oder nach Eintritt einer vorbestimmten Bedingung wieder freigegeben. Die vorbestimmte Bedingung ist dabei zweckmäßigerweise eine Bremspedalbetätigung, eine Gaspedalbetätigung oder ein Fahrzustand, welcher eine automatische Schaltfunktion erfordert.

Bei der Steuervorrichtung ist vorgesehen, daß ein Signalmittel vorgesehen ist, welches ein automatische Schaltanforderungen der Steuerelektronik unterdrückendes Signal abgibt, solange sich der Schalthebel nicht in seiner Neutralstellung befindet.

Dies hat den Vorteil, daß eine momentane manuelle Gangwahl eines Fahrers durch diesen solange aufrechterhalten bleibt und nicht durch eine automatische Schaltfunktion übersteuert wird, solange dies der Fahrer wünscht. Dazu muß der Fahrer lediglich den Schalthebel nach einem Antippen in einer ausgelenkten Stellung festhalten. Ferner sind keine zusätzlichen Schalter oder Anzeigeinstrumente zur Realisation der Unterdrückung einer automatischen Schaltfunktion erforderlich, was Kosten einspart und zur Übersichtlichkeit von Bedienelementen des Kraftfahrzeugs beiträgt. Dadurch ist auch die Bedienung selbst intuitiv erlernbar und muß nicht nachgelesen werden. Der Fahrer erhält jederzeit die Möglichkeit, sofern es ihm sinnvoll erscheint, die programmierten Erleichterungen der automatischen Getriebesteuerung für einen augenblicklichen Fahrzustand unter Verwendung des ihm bereits gewohnten Schaltelementes auszuschalten bzw. zu unterdrücken.

Eine einfache und kostengünstige Ausführung erzielt man dadurch, daß das Signalmittel ein Auslenkungssensor am Schalthebel oder in der Steuerelektronik integriert ist.

Eine Realisation der Erfindung auch in bereits bestehende System ohne mechanischen Umbau oder Einbau zusätzlicher Komponenten erzielt man dadurch, daß das Signalmittel ein Softwaremodul umfaßt. Hierbei wird beispielsweise in einem elektronischen Steuergerät des Getriebes lediglich die Software erweitert oder ersetzt.

Zweckmäßigerweise ist das Stellmittel eine Federanordnung.

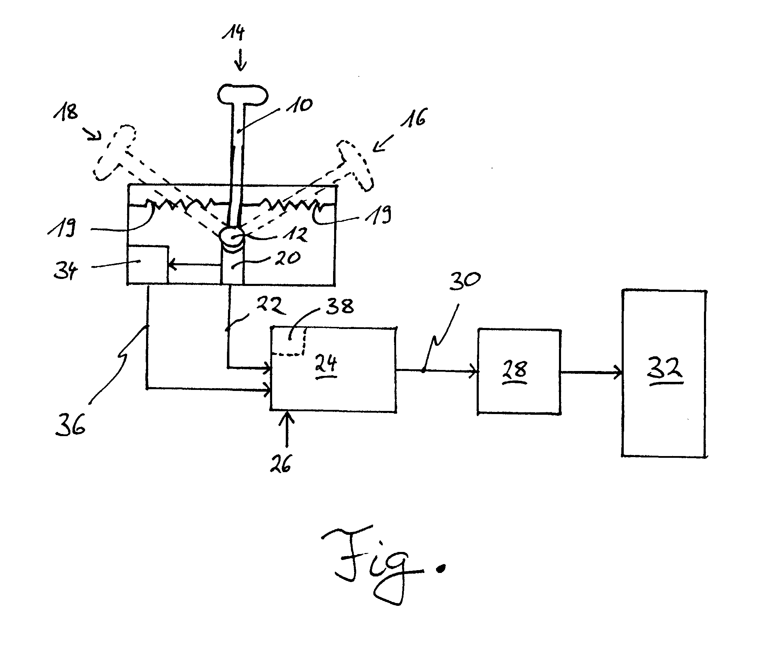

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt ein schematisches Blockschaltbild einer bevorzugten Ausführungsform einer erfindungsgemäßen Steuervorrichtung.

Diese umfaßt einen Schalthebel 10, welcher um ein Gelenk 12 aus einer in der Fig. mit durchgezogener Linie dargestellten Neutralstellung 14 auslenkbar ist. Bezugszeichen 16 und 18 bezeichnen jeweils eine mit gestrichelten Linien veranschaulichte ausgelenkte Stellung des Schalthebels 10. Stellmittel 19 wirken in Form von Federn als Rückstellmechanismus des ausgelenkten Schalthebels 10 in die Neutralstellung 14.

Ein Sensormittel 20 bestimmt eine Stellung bzw. Auslenkung des Schalthebels 10 und gibt über eine Leitung 22 ein entsprechendes Signal an eine Steuerelektronik 24. Die Steuerelektronik 24 fordert entweder aufgrund einer manuellen Betätigung des Schalthebels 10 oder aufgrund eines von der Steuerelektronik 24 selbst erkannten Fahrzustandes, beispielsweise mittels Informationen, welche über Signaleingang 26 an die Steuerelektronik 24 gegeben werden, eine Schaltfunktion über eine Getriebesteuervorrichtung 28 an. Diese führt dann entsprechend einem über Leitung 30 ankommenden Eingangssignal eine automatische bzw. automatisierte Schaltfunktion an einem Automatikgetriebe bzw. einem automatisierten Getriebe 32 aus.

In der dargestellten bevorzugten Ausführungsform ist das Sensormittel 20 zusätzlich mit einem Signalmittel 34 verbunden. Dieses sendet über eine Leitung 36 ein Signal an die Steuerelektronik 24 sobald sich der Schalthebel außerhalb der Neutralstellung 14 befindet. Die Steuerelektronik 24 ist dabei derart ausgebildet, daß automatisch von dieser erzeugte Schaltanforderungen an die Getriebesteuervorrichtung 28 unterdrückt werden. Somit ist sozusagen eine automatische Steuerung des Getriebes 32 abgeschaltet, solange ein Fahrer den Schalthebel 10 in einer seiner ausgelenkten Positionen 16 bzw. 18 hält. Es ist klar, daß das Signalmittel 34 auch in einem inversen Modus betrieben werden kann, d.h. es erfolgt die Abgabe eines Aktionen der Steuerelektronik freigebendes Signal, wenn sich der Schalthebel 10 in der Neutralstellung 14 befindet und kein Signal, wenn der Schalthebel 10 aus der Neutralstellung 14 ausgelenkt ist. Ohne dieses Signal sind dann entsprechende automatische Schaltanforderung durch die Steuerelektronik 24 blockiert bzw. unterdrückt.

Statt des Signalmittels 34 und der Leitung 36 kann dies auch durch ein Softwaremodul 38 in der Steuerelektronik 24 realisiert werden. Dies ist in der Steuerelektronik 24 mit gestrichelten Linien entsprechend dargestellt. Das Softwaremodul 38 wertet dabei beispielsweise das von Sensormittel 20 über Leitung 22 übertragene Signal aus und erkennt auf diese Weise einen ausgelenkten Schalthebel 10. Weiterhin veranlaßt das Softwaremodul eine Sperre für alle ggf. automatisch von der Steuerelektronik 24, beispielsweise aufgrund von Daten aus dem Eingang 26. erzeugten Schaltanforderungen, so daß der mittels der manuellen Betätigung des Schalthebels 10 gewählte Gang nicht durch eine automatische Schaltanforderung übersteuert bzw. verändert wird. Erst nach Rückkehr der Schalthebels 10 in die Neutralstellung 14 wird diese Funktion wieder freigegeben und die Steuerelektronik 24 unterstützt den Fahrer wieder durch bedarfsweise automatisches Schalten.

Die manuelle, sequentielle Schaltung der Gänge durch Betätigen des Schalthebels 10 wird dabei zweckmäßigerweise derart ausgeführt, daß die Schaltanforderung an die Getriebesteuervorrichtung nicht erst bei Rückkehr des Schalthebels 10 in die Neutralstellung 14, sondern sofort erfolgt, wenn sich der Schalthebel 10 in einer ausgelenkten Stellung 16 oder 18 befindet. Dadurch kann der Fahrer seine momentane manuelle Schaltanforderung dadurch festhalten bzw. den mit dieser momentanen Schaltanforderung angewählten Gang einfach dadurch halten, daß er manuell eine Rückkehr des Schalthebels 10 gegen die Federkraft der Federn 19 verhindert. Erst nachdem der Fahrer den Schalthebel 10 losgelassen hat und dieser unter Einwirkung der Federn 19 wieder in die Neutralstellung 14 zurückkehrt, nimmt die automatische Gangwahl mittels der Steuerelektronik 24 wieder ihren Betrieb auf. Mit anderen Worten werden automatische Aktionen der Steuerelektronik 24 nur in der Neutralstellung 14 des Schalthebels 10 ausgeführt. Solange sich der Schalthebel in einer der Positionen 16 oder 18 befindet, an denen eine Hoch- oder Runterschaltung um einen Gang erfolgt, wird der somit eingelegte Gang solange gehalten, bis der Fahrer den Schalthebel 10 losläßt und dieser in seine Neutralstellung zurückkehren kann.

Durch die Möglichkeit der bedarfsweisen Abschaltung von automatischen Schaltanforderungen durch die Steuerelektronik 24 erhält der Fahrer die Möglichkeit beispielsweise im 2, Gang anzufahren. Hierzu betätigt der Fahrer im Stillstand des Fahrzeugs, bei dem die Steuerelektronik den 1. Gang gewählt hat, den Schalthebel 10 beispielsweise in die Stellung 18. Dadurch wird bereits bei Erreichen der Stellung 18 der 2. Gang eingelegt. Weiterhin hält der Fahrer den Schalthebel 10 in der Stellung 18 und betätigt das Fahr- bzw. Gaspedal. Auf diese Weise setzt sich das Fahrzeug im 2. Gang in Bewegung. Der 2. Gang bleibt auch weiterhin eingelegt. Selbst nach Erreichen einer Maximaldrehzahl des Motors erfolgt kein automatisches Hochschalten durch eine entsprechende Schaltanforderung der Steuerelektronik 24. Erst nach Loslassen des Schalthebels 10 und dessen Rückkehr in die Neutralstellung 14 setzt die Automatik wieder ein. Diesen Zeitpunkt hat in einfacher Weise der Fahrer dadurch in der Hand, daß er den Schalthebel erst aus der Stellung 16 bzw. 18 freigibt, sobald er wieder eine automatische Unterstützung beim Gangschalten wünscht.

Durch Vorsehen einer entsprechenden Zeitverzögerung bis ein automatischer Betrieb nach der Rückkehr des Schalthebels 10 in die Neutralstellung 14 wieder freigegeben wird, ist ferner über eine längere Zeitspanne ein manueller Betrieb mit abgeschalteter Automatik möglich, wobei der Fahrer manuell sequentiell bedarfsweise die Gänge entsprechend einer Fahr- bzw. Verkehrssituation schaltet ohne dabei von der Steuerelektronik übersteuert oder gestört zu werden. In diesem Zustand verhält sich die Steuervorrichtung wie ein automatisiertes Schaltgetriebe, wobei jedoch jederzeit und auf einfache Weise eine Rückkehr in den Modus eines Automatikgetriebes möglich ist.

### BEZUGSZEICHENLISTE

- 10: Schalthebel
- 12: Gelenk
- 14: Neutralstellung
- 16: ausgelenkte Stellung
- 18: ausgelenkte Stellung
- 19: Stellmittel
- 20: Sensormittel
- 22: Leitung
- 24: Steuerelektronik
- 26: Signaleingang
- 28: Getriebesteuervorrichtung
- 30: Leitung
- 32: Automatikgetriebe bzw. automatisiertes Getriebe
- 34: Signalmittel
- 36: Leitung
- 38: Softwaremodul

## Patentansprüche

1. Verfahren zum Steuern eines Automatikgetriebes (32) oder eines automatisierten Schaltgetriebes eines Kraftfahrzeuges, wobei eine Schaltfunktion wahlweise in einem Automatikbetrieb automatisch oder in einem Manuellbetrieb mittels eines Schalthebels (10) durch Auslenken aus einer Neutralstellung (14) manuell gesteuert ausgelöst wird, **dadurch gekennzeichnet, dass** eine automatische Schaltfunktion solange unterdrückt wird, wie der Schalthebel (40) außerhalb der Neutralstellung (14) ausgelenkt ist, so dass nämlich eine momentane manuelle Gangwahl eines Fahrers aufrecht erhalten bleibt und nicht durch eine automatische Schaltfunktion übersteuert wird, und dass die manuell ausgelöste Schaltfunktion automatisiert ausgeführt wird, sobald der Schalthebel (10) seine Neutralstellung (14) über eine vorbestimmte Auslenkung hinweg verlassen hat.

2. Verfahren nach Anspruch 1
**dadurch gekennzeichnet, daß**
nach einer Rückkehr des Schalthebels (10) in seine Neutralstellung (14) eine automatische Steuerung des Getriebes (32) sofort, oder nach Ablauf einer vorbestimmten Zeit, oder nach Eintritt einer vorbestimmten Bedingung wieder freigegeben wird.

3. Verfahren nach Anspruch 2,
**dadurch gekennzeichnet, daß**
die vorbestimmte Bedingung eine Bremspedalbetätigung, eine Gaspedalbetätigung, oder ein Fahrzustand ist, welcher eine automatische Schaltfunktion erfordert.

4. Steuervorrichtung für ein Automatikgetriebe oder ein automatisiertes Schaltgetriebe (32) mit einem aus einer Neutralstellung (14) auslenkbaren Schalthebel (10), einem Stellmittel (19), welches den Schalthebel (10) in seine Neutralstellung (14) zurückstellt und einer Getriebesteuervorrichtung (28), welche in Abhängigkeit von Auslenkungen des Schalthebels (10) oder in Abhängigkeit von Schaltanforderungen einer Steuerelektronik (24) die Gänge des Getriebes (32) schaltet, arbeitend gemäß dem Verfahren nach einem der Ansprüche 1 bis 3
**dadurch gekennzeichnet, daß**
ein Signalmittel (34;38) vorgesehen ist, welches ein automatische Schaltanforderungen der Steuerelektronik (24) unterdrückendes Signal abgibt, solange sich der Schalthebel (10) nicht in seiner Neutralstellung (14) befindet.

5. Steuervorrichtung nach Anspruch 4,
**dadurch gekennzeichnet, daß**
das Signalmittel ein Auslenkungssensor (24) am Schalthebel (10) ist.

6. Steuervorrichtung nach Anspruch 4,
**dadurch gekennzeichnet, daß**
das Signalmittel in der Steuerelektronik (24) integriert ist.

7. Steuervorrichtung nach einem der Ansprüche 4 bis 6,
**dadurch gekennzeichnet, daß**
das Signalmittel ein Softwaremodul (38) umfaßt.

8. Steuervorrichtung nach einem der Ansprüche 4 bis 7,
**dadurch gekennzeichnet, daß**
das Stellmittel eine Federanordnung (19) ist.

## Claims

1. Method for controlling an automatic transmission (32) or an automated gear-changing transmission for a motor vehicle, in which a gear-changing function is optionally initiated automatically in an automatic mode or it is initiated under manual control by means of a gear-changing lever (10), by deflecting the lever from a neutral position (14), in a manual mode,
**characterized in that** an automatic gear-changing function is suppressed for as long as the gear-changing lever (10) is deflected away from the neutral position (14), so that, specifically, an instantaneous manual gear selection by a driver is maintained and is not overridden by an automatic gear-changing function, and **in that** the manually initiating gear-changing function is carried out on an automated basis as soon as the gear-changing lever (10) has left its neutral position (14) by more than a predetermined deflection.

2. Method according to Claim 1,
**characterized in that**
once the gear-changing lever (10) has been returned to its neutral position (14) automatic control of the transmission (32) is enabled once again immediately, or after a predetermined time has elapsed, or after a predetermined condition has occurred.

3. Method according to Claim 2,
**characterized in that**
the predetermined condition is brake pedal operation, accelerator pedal operation, or a driving situation which requires an automatic gear-changing function.

4. Control apparatus for an automatic transmission or for an automated gear-changing transmission (32) having a gear-changing lever (10) which can be deflected from a neutral position (14), having a control means (19) which resets the gear-changing lever (10) to its neutral position (14), and having a transmission control apparatus (28) which selects the gear for the transmission (32) as a function of deflections of the gear-changing lever (10) or as a function of gear-changing requirements from control electronics (24), operating on the basis of the method according to one of Claims 1 to 3,
**characterized in that**
a signal means (34; 38) is provided, which emits a signal that suppresses automatic gear-changing requirements from the control electronics (24) for as long as the gear-changing lever (10) is not located in its neutral position (14).

5. Control apparatus according to Claim 4,
**characterized in that**
the signal means is a deflection sensor (24) on the gear-changing lever (10).

6. Control apparatus according to Claim 4,
**characterized in that**
the signal means is integrated in the control electronics (24).

7. Control apparatus according to one of Claims 4 to 6,
**characterized in that**
the signal means comprises a software module (38).

8. Control apparatus according to one of Claims 4 to 7,
**characterized in that**
the control means is a spring arrangement (19).

## Revendications

1. Procédé de commande d'une transmission automatique (32) ou d'une boîte de vitesses automatisée d'un véhicule automobile, dans lequel une fonction de changement de vitesses est déclenchée au choix automatiquement dans un mode automatique ou manuellement dans un mode manuel au moyen d'un levier de sélection (10) par déviation depuis une position neutre (14), **caractérisé en ce qu'**une fonction de changement de vitesses automatique est réprimée tant que le levier de sélection (10) est dévié hors de la position neutre (14), de sorte qu'une sélection de vitesse temporaire manuelle par un conducteur soit maintenue et ne soit pas neutralisée par une fonction de changement de vitesse automatique, et que la fonction de changement de vitesses déclenchée manuellement soit réalisée de manière automatique dès que le levier de sélection (10) a quitté sa position neutre (14) au-delà d'une déviation prédéterminée.

2. Procédé selon la revendication 1,
**caractérisé en ce que**
après un retour du levier de sélection (10) dans sa position neutre (14), une commande automatique de la transmission (32) est à nouveau libérée immédiatement, ou après un temps prédéterminé, ou après l'entrée d'une condition prédéterminée.

3. Procédé selon la revendication 2,
**caractérisé en ce que**
la condition prédéterminée est un actionnement de la pédale de frein, un actionnement de la pédale d'accélérateur, ou un état de conduite qui requiert une fonction de changement de vitesses automatique.

4. Dispositif de commande pour une transmission automatique ou une boîte de vitesses automatisée (32) comprenant un levier de sélection (10) pouvant être dévié d'une position neutre (14), un moyen de commande (19), qui ramène le levier de sélection (10) dans sa position neutre (14) et un dispositif de commande de boîte de vitesses (28) qui commute les rapports de la boîte de vitesses (32) en fonction de déviations du levier de sélection (10) ou en fonction d'ordres de changement de vitesses d'une électronique de commande (24), fonctionnant selon le procédé selon l'une quelconque des revendications 1 à 3,
**caractérisé en ce que**
l'on prévoit un moyen de signal (34 ; 38) qui émet un signal réprimant des ordres de changement de vitesses automatiques de l'électronique de commande (24) tant que le levier de sélection (10) ne se trouve pas dans sa position neutre (14).

5. Dispositif de commande selon la revendication 4,
**caractérisé en ce que**
le moyen de signal est un capteur de déviation (24) sur le levier de sélection (10).

6. Dispositif de commande selon la revendication 4,
**caractérisé en ce que**
le moyen de signal est intégré à l'électronique de commande (24).

7. Dispositif de commande selon l'une quelconque des revendications 4 à 6,
**caractérisé en ce que**
le moyen de signal comprend un module de logiciel (38).

8. Dispositif de commande selon l'une quelconque des revendications 4 à 7,
**caractérisé en ce que**
le moyen de commande est un agencement à ressort (19).
